# EUROPEAN PATENT APPLICATION

(11) **EP 2 860 071 A1**
(43) Date of publication of application: **15.04.2015**
(21) Application number: 14186785.3
(22) Date of filing: 29.09.2014
(51) Int. Cl.: B60R 25/20, B60R 25/40, B60R 11/02, B60R 25/04

(54) **Entry system for vehicle**

(30) Priority: 09.10.2013 JP 2013212279
(71) Applicant: Honda Motor Co., Ltd., Tokyo 107-8556 (JP)
(72) Inventor: Ishida, Yoshimitsu, Wako-shi, Saitama 351-0193 (JP); Aoki, Koji, Wako-shi, Saitama 351-0193 (JP)
(74) Representative: Prechtel, Jörg

(57) **Abstract**

A vehicular entry system, which performs collation using a mobile terminal (28) having an authentication element (74) and enables use of a predetermined function of a vehicle on the basis of a result of the collation, includes: an authentication control section (110) which, when authentication information from the authentication element (74) matches predetermined authentication information, generates a signal enabling use of the predetermined function of the vehicle; a door detection section (120) which outputs a signal in response to opening/closing of a vehicle door; and a cradle (32) capable of fixing the mobile terminal, the authentication control section (110) activating a read section (72), provided on the cradle, on the basis of the signal from the door detection section, the read section (72) being capable of transmitting an electromagnetic wave, the authentication element (74) being capable of generating electric power from the electromagnetic wave and transmitting the authentication information.

## Description

The present invention relates generally to entry systems for use in vehicles (i.e., vehicular entry systems), and more particularly to a vehicular entry system capable of causing a drive section, such as a drive motor or an engine, to operate in response to a user getting in the vehicle.

Japanese Patent No. 4723352 (hereinafter referred to as "Patent Literature 1"), for example, discloses, as a vehicular entry system, an electronic key system including a smart ECU provided in a vehicle, which can determine whether or not a vehicle key ID code possessed by a mobile device matches a vehicle key ID code recorded in a memory of the smart ECU.

More specifically, when the mobile device is located outside the vehicle, the smart ECU transmits a request signal to the mobile device by means of an outside-vehicle LF transmitter and then receives the vehicle key ID code from the mobile device by means of an RF receiver, after which the smart ECU performs an outside-vehicle collation process. Once the vehicle key ID code received from the mobile device is authenticated through the outside-vehicle collation process, a user becomes able to unlock a door of the vehicle. When the user opens the vehicle door, i.e. when the mobile device is located inside the vehicle, the smart ECU transmits a request signal to the mobile device by means of an inside-vehicle LF transmitter instead of the outside-vehicle LF transmitter and then receives the vehicle key ID code from the mobile device by means of the RF receiver, after which the smart ECU performs an inside-vehicle collation process. Then, once the vehicle key ID code received from the mobile device is authenticated through the inside-vehicle collation process, the user becomes able to activate an engine of the vehicle.

Further, according to the disclosure of Patent Literature 1, a communication system is provided on the vehicle as an add-on system, so that the user can unlock the vehicle door not only with the mobile device but also with a mobile phone that includes a communication circuit with an IC card called Felica (registered trademark) incorporated therein.

More specifically, the user activates the communication system by depressing an activation button provided on a door handle knob. Then, as the user passes the mobile phone over a transmission/reception antenna of a reader/writer, the communication circuit transmits a mobile key ID code to the transmission/reception antenna. Then, upon determination that the mobile key ID code of the mobile phone matches a mobile key ID code stored in a memory of a communication controller, the communication controller outputs a collation establishment signal to a main controller. In performing the outside-vehicle collation process, the smart ECU not only transmits the request signal by means of the outside-vehicle LF transmitter but also outputs outside-vehicle LF data to the main controller via a first line. Once the main controller receives the collation establishment signal and the outside-vehicle LF data, the communication system can transmit, by means of another RF transmitter, a vehicle key ID code stored in a memory of the main controller instead of the vehicle key ID code from the mobile device. Thus, the user can unlock the vehicle door with the mobile phone.

Similarly, once the main controller receives the collation establishment signal and the inside-vehicle LF data, the communication system can transmit, by means of the other RF transmitter, a vehicle key ID code for the inside-vehicle collation process stored in the memory of the main controller instead of the vehicle key ID code from the mobile device. Note, however, that the mobile device has to be placed or set on a cradle; in other words, it is necessary for the main controller to receive a mobile-phone-placement signal as well as the collation establishment signal and the inside-vehicle LF data.

However, the cradle has to detect whether the mobile phone is currently set on the cradle; for that purpose, the cradle has to have a detection section, such as a mechanical switch. Namely, the communication system has to have not only the transmission/reception antenna of the reader/writer but also the detection section of the detection section of the cradle, which would increase manufacturing cost of the communication system. Besides, dark current would increase due to the provision of the detection section of the cradle.

In view of the foregoing prior art problems, it is an object of the present invention to provide a vehicular entry system which can be reduced in manufacturing cost. Another object of the present invention is to provide a vehicular entry system which can reduce necessary power consumption. Other objects of the present invention will become apparent to a person skilled in the art with reference to the following illustrative description of preferred embodiments and the accompanying drawings.

According to a first aspect of the present invention, there is provided a vehicular entry system which performs collation using a mobile terminal having an authentication element and enables use of a predetermined function of a vehicle on the basis of a result of the collation, which comprises: an authentication control section which, when authentication information from the authentication element matches predetermined authentication information, generates a signal enabling use of the predetermined function of the vehicle; a door detection section which outputs a signal in response to opening/closing of a door of the vehicle; and a cradle capable of fixing thereto the mobile terminal, the authentication control section activating a read section, provided on the cradle, on the basis of the signal output from the door detection section, the read section being capable of transmitting an electromagnetic wave, the authentication element being capable of generating electric power from the electromagnetic wave and transmitting the authentication information.

According to the first aspect of the present invention, once a user sets the mobile terminal on the cradle, the authentication element of the mobile terminal becomes able to transmit the authentication information in response to the electromagnetic wave transmitted from the read section of the cradle. Thus, the vehicular entry system does not require the cradle to have a mechanical switch, so that manufacturing cost of the vehicular entry system can be reduced. Further, the read section of the cradle is activated on the basis of the signal output in response to opening/closing of the door of the vehicle. In other words, the read section does not have to transmit the electromagnetic wave before the door is opened. Thus, power consumption by the vehicular entry system can be reduced.

Note that the objects of the vehicular entry system of the present invention do not include automatically unlocking the door. The user can open the door, in response to which the read section of the cradle is activated. In addition, it is not necessary for the vehicular entry system of the present invention to use a key fob (FOB) like the mobile device disclosed in Patent Literature 1. Also, in the case of the vehicular entry system of the present invention, it is not necessary to set a communication area outside and/or inside the vehicle by use of communication devices, such as an outside-vehicle LF transmitter, an inside-vehicle LF transmitter and an RF receiver, and thus, the manufacturing cost of the vehicular entry system can be even further reduced.

Further, according to the first aspect of the present invention, the read section of the cradle is activated, for example, in response to the user merely opening the door without depressing a button like the activation button disclosed in Patent Literature 1. In other words, the user only has to get in the vehicle and does not perform any special operation. As a result, the first aspect of the present invention can enhance convenience of the user when the reader section of the cradle is to be activated.

According to a second aspect of the present invention, the vehicular entry system further comprises an operation section capable of activating a drive section of the vehicle. When the read section has not received the authentication information from the authentication element before a predetermined time lapses after the authentication control section activates the read section, the authentication control section stops activating the read section. The authentication control section activates the read section only while operation information from the operation section indicates depression of the operation section.

According to such a second aspect of the present invention, when the read section has not received the authentication information from the authentication element before the predetermined time lapses after the authentication control section activates the read section, the authentication control section can stop activating the read section. Thus, the power consumption by the vehicular entry system can be even further reduced.

In the vehicular entry system disclosed in Patent Literature 1, where the activation button is provided on the door handle knob, the user cannot stop activation of the communication system by re-depressing the activation button after having got in the vehicle. Thus, power consumption by the communication system would undesirably increase.

According to the second aspect of the present invention, on the other hand, the read section of the cradle after the stopping of the activation can be activated again by the user operating the operation section capable of activating the drive section of the vehicle. In other words, the user only has to operate the operation section, capable of activating the drive section of the vehicle, without performing any special operation, and thus, the second aspect of the present invention can enhance the convenience of the user when the read section of the cradle is to be activated. Particularly, because the read section of the cradle is activated only for the time period when the operation information from the operation section indicates "depression" of the operation section, the power consumption by the vehicular entry system can be even further reduced.

According to a third aspect of the present invention, the vehicular entry system further comprises a transmission section capable of transmitting a function limiting signal for limiting a predetermined function of the mobile terminal. When the authentication information from the authentication element matches the predetermined authentication information, the authentication control section transmits, via the transmission section, the function limiting signal to the mobile terminal.

According such a third aspect, when the authentication information from the authentication element matches the predetermined authentication information, the predetermined function of the mobile terminal is limited. In other words, the predetermined function of the mobile terminal is limited when the user has been allowed to drive the vehicle, and thus, the user can more devote himself or herself to driving the vehicle.

According to a fourth aspect of the present invention, the vehicular entry system further comprises a notification section capable of notifying predetermined notification information. The read section transmits the electromagnetic wave at predetermined timing after the authentication information from the authentication element matches the predetermined authentication information. When the read section has not received the authentication information from the authentication element, the authentication control section notifies the notification information via the notification section.

According to such a fourth aspect, a determination is made at predetermined timing as to whether the mobile terminal having a first-authenticated authentication element is currently set on the cradle. When the mobile terminal is not currently set on the cradle, or when another mobile terminal not duly authenticated is currently set on the cradle, the notification section can notify the user of notification information. In response to such notification information, the user can set on the cradle the mobile terminal having the first-authenticated authentication element. In other words, the fourth aspect of the present invention can restrain the first-authenticated tablet terminal from being removed from the cradle, and thus, even when use of the predetermined function of the vehicle is limited, the user can use again the predetermined function.

According to a fifth aspect of the present invention, the predetermined authentication information is transmitted from a server located outside the vehicle, and the authentication control section generates the signal enabling use of the predetermined function of the vehicle when not only the authentication information from the authentication element matches the predetermined authentication information but also the current time matches reservation information associated with the predetermined authentication information.

According to such a fifth aspect, the predetermined authentication information is transmitted from the server located outside the vehicle, and thus, the predetermined authentication information is variable. Thus, a plurality of users can use the predetermined function of the user, and the server can enable at least one of the plurality of users to use the predetermined function. Note, however, that a time when the at least one of the plurality of users is allowed to use the predetermined function of the vehicle is limited in accordance with reservation information. In this manner, the plurality of users can share the vehicle.

According to a sixth aspect of the present invention, when a vehicle battery of the vehicle is being charged by an external power supply located outside the vehicle, the authentication control section not only cancels the signal enabling use of the predetermined function of the vehicle and stops activating the read section but also supplies electric power of the vehicle battery to a predetermined electric load irrespective of whether the authentication information is being transmitted from the authentication element.

According to such a sixth aspect, when the vehicle battery of the vehicle is being charged by the external power supply, the user cannot use the predetermined function of the vehicle. In other words, the vehicular entry system can effectively prevent theft of the vehicle. However, because the predetermined electric load can operate, enhanced convenience of the user can be achieved.

Further, according to a seventh aspect of the present invention, the predetermined electric load is a communication unit capable of transmitting a state of the vehicle.

According to such a seventh aspect, the communication unit can transmit a state of the vehicle when the vehicle battery of the vehicle is being charged by the external power supply. Thus, when the user is located outside the vehicle, a desired state of the vehicle, such as a state of charge of the vehicle battery, can be monitored, and thus, the convenience of the user can be even further enhanced.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will hereinafter be described in detail, by way of example only, with reference to the accompanying drawings, in which:
Fig. 1 is a view showing an example outer appearance of a passenger compartment of a vehicle in which is disposed a cradle of a vehicular entry system according to an embodiment of the present invention;
Fig. 2 is a view showing an example outer appearance of a mobile terminal fixedly set on the cradle of Fig. 1;
Fig. 3 is a view showing an example overall construction of the embodiment of the vehicular entry system;
Fig. 4 depicts a part of a flow chart showing an example sequence of operations performed by an authentication control section in the embodiment of the vehicular entry system;
Fig. 5 depicts the remaining part of the flow chart showing the example sequence of operations performed by the authentication control section in the embodiment of the vehicular entry system;
Fig. 6 is a flow chart showing details of a collation process shown in Fig. 4; and
Fig. 7 is a flow chart showing another example sequence of operations performed by the authentication control section in the embodiment of the vehicular entry system.

The following will describe preferred embodiments of the present invention in order to facilitate understanding of the basic principles of the invention, but it should be appreciated that the present invention is not limited to the described embodiments.

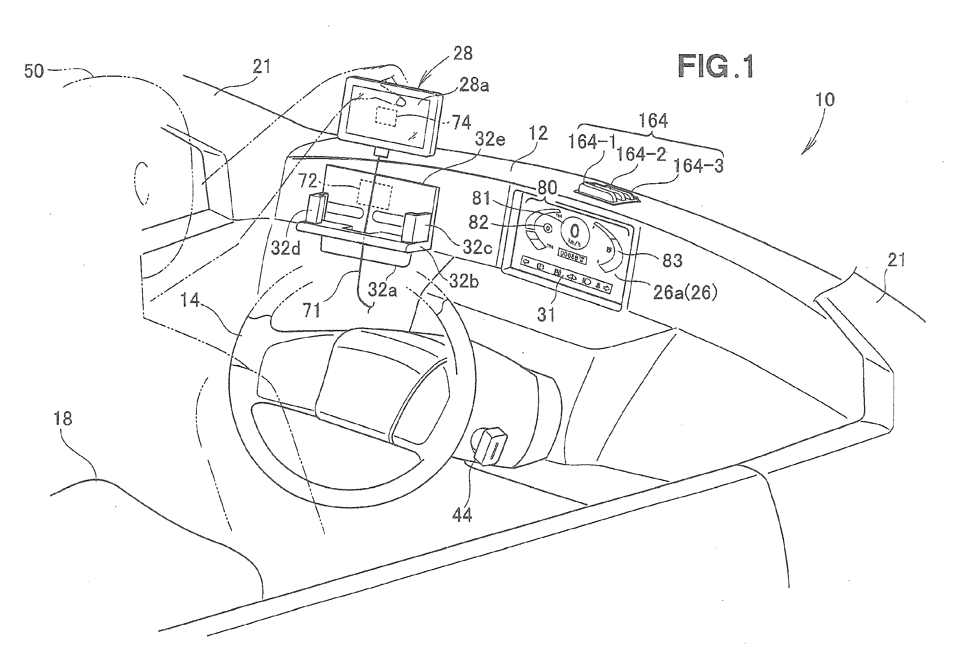

Fig. 1 is a view showing an example outer appearance of a passenger compartment of a vehicle in which is provided a cradle 32 of a vehicular entry system according to an embodiment of the present invention. As shown in Fig. 1, the cradle capable of fixedly setting thereon a mobile terminal 28 is provided in the passenger compartment of the vehicle 10, e.g. on an instrument panel (dashboard) 12 of the vehicle 10. The cradle 32 shown in Fig. 1 includes members 32a, 32b, 32c, 32d and 32e capable of fixing thereto the mobile terminal 28. For example, the member 32a is fixed to the instrument panel 12 to thereby support the other members 32b, 32c, 32d and 32e. For example, the members 32b and 32e support the bottom surface and back surface of the mobile terminal 28, and each of the members 32c and 32d supports a corresponding one of two opposite side surfaces of the mobile terminal 28.

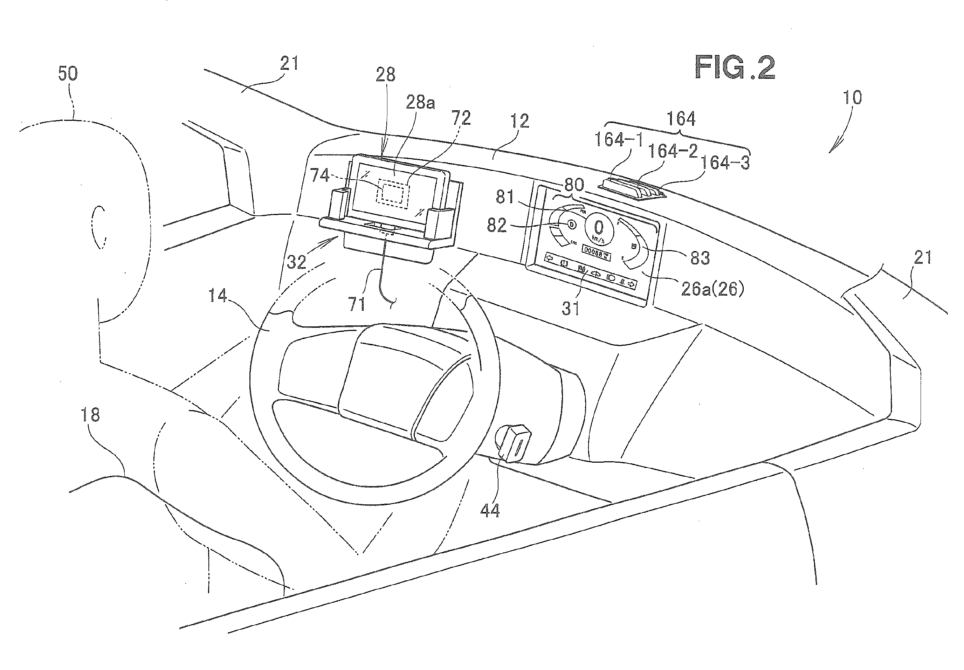

Further, the cradle of Fig. 1 includes a read section 72 that is incorporated, for example, in the above-mentioned member 32e. Referring to Fig. 2, the read section 72 can face or overlap an authentication element 74 incorporated, for example, in the back surface of the mobile terminal 28 by a user 50, who is a vehicle occupant such as a driver or a passenger, setting the mobile terminal 28 on the cradle 32. The vehicular entry system including such a cradle 32 performs a collation process by use of the mobile terminal 28 having the authentication element 74 and permits use of a predetermined function of the vehicle 10 on the basis of a result of the collation.

The mobile terminal 28 of Fig. 1 may be, for example, a tablet terminal. The tablet terminal is generally small in size and thickness, and thus, the mobile terminal 28 that is a tablet terminal is not only readily portable but also readily settable on the vehicle 10. Note that the mobile terminal 28 may alternatively be a PDA (Personal Digital Assistant) terminal, a mobile phone terminal that is a so-called smart phone, or the like. In recent years, the mobile terminal 28, such as a tablet terminal, is commercially available at a low price, and thus, it is possible to reduce manufacturing cost of the vehicular entry system using the mobile terminal 28.

Fig. 2 shows an example outer appearance of the mobile terminal 28 fixedly set on the cradle 32 of Fig. 1. The members 32c and 32d of the cradle 32 are movable by the user 50 pushing the members 32c and 32d, so that the cradle 32 can fix the mobile terminal 28 more reliably. In the case where the mobile terminal 28 is a tablet terminal, the cradle 32 can fit the size of the mobile terminal (tablet terminal) 28. Further, in the case where the mobile terminal 28 is a smart phone (mobile phone terminal), the members 32c and 32d of the cradle 32 can be adjusted to fit the size of the mobile terminal (tablet terminal) 28. Needless to say, the shape of the cradle 32 and the position of the read section 72 may be designed such that the cradle 32 can fix thereon a dedicated mobile terminal 28, and the cradle 32 may be a replaceable cradle.

An electric charging cable 71 may be connected to the cradle 32 so that a mobile battery (not shown) incorporated in the mobile terminal 28 can be charged via the electric charging cable 71. The mobile battery of the mobile terminal 28 may be charged either in a wired fashion via the electric charging cable 71 that is, for example, in the form of a USB cable, or in a wireless manner via a wireless charging unit (not shown) provided on the cradle 32 or the instrument panel 12.

The authentication element 74 of the mobile terminal 28 generates electric power from an electromagnetic wave transmitted from the read section 72 of the cradle 32, rather than being supplied with electric power from the mobile battery, and thus is capable of transmitting authentication information. The authentication element 74 can communicate authentication information and other information with the read section 72 in accordance with a predetermined standard, such as the NFC (Near Field Communication). Here, NFC has upper compatibility with communication standards, such as Felica (registered compatibility), Mifare (registered trademark).

Once the user 50 sets the mobile terminal 28 on the cradle 32, the authentication element 74 of the mobile terminal 28 can transmit authentication information in response to the electromagnetic wave transmitted from the read section 72 of the cradle 32. In other words, the instant embodiment of the vehicular entry system need not have a mechanical switch provided on the cradle 32. Thus, the manufacturing cost of the vehicular entry system can be reduced. It is preferable that the electromagnetic wave from the read section 72 be a carrier wave containing information, such as a request signal, and it is more preferable that the information contained in the carrier wave be encrypted information.

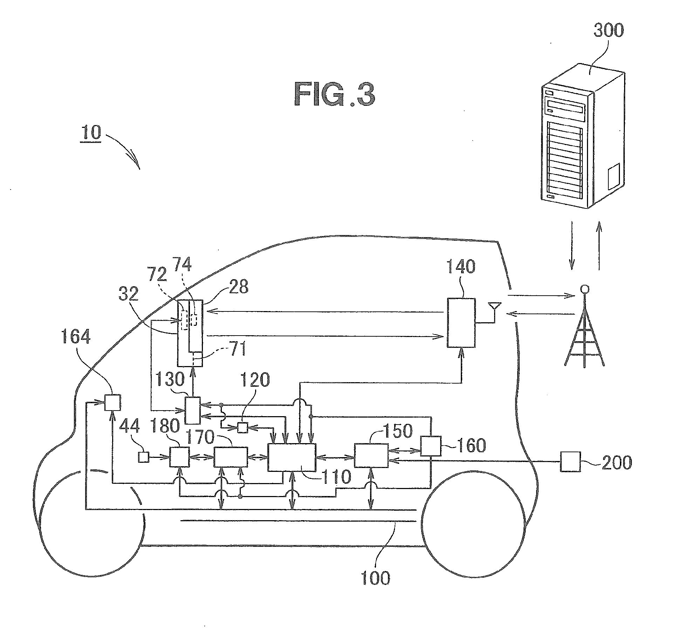

Fig. 3 schematically shows an example overall construction of the instant embodiment of the vehicular entry system, where the vehicle 10 is, for example, an automobile. The vehicular entry system of Fig. 3 includes, among other things, the cradle 32 shown in Fig. 1, and an authentication control section 110 and a door detection section120 shown in Fig. 3. The door detection section120 of Fig. 3 is, for example, in the form of a door switch that can output a signal (door signal) in response to opening/closing of a door of the vehicle 10. The signal (door signal) output from the door detection section120 indicates a "high" level or value "1" when the door is opened and a "low" level or value "0" when the door is closed.

Thus, the door detection section120 can detect the vehicle occupant (user) 50 getting in the vehicle 10. Because the door detection section120 outputs to the authentication control section 110 the signal (door signal) indicative of a result of the detection, the authentication control section 110 can activate the read section 72, provided in the cradle 32, on the basis of the signal output from the door detection section120. In other words, the read section 72 does not have to transmit the electromagnetic wave or carrier wave, for example, before the vehicle door is opened. Therefore, power consumption by the vehicular entry system can be reduced.

More specifically, the authentication control section 110 generates a signal (activation signal) for activating the read section 72 of the cradle 32 and outputs the generated activation signal to the read section 72, for example, via a power supply section 130. More specifically, electric power is supplied to the power supply section 130, for example, from a vehicle battery 160, and the power supply section 130 transforms (or transforms the voltage of) the electric power (e.g., 12V) into electric power matching the read section 72 and supplies the transformed electric power to the read section 72 in response to opening of the door. In this manner, the read section 72 of the cradle 32 is activated in response to the opening of the door.

Further, the read section 72 receives, from the authentication element 74 of the mobile terminal 28, authentication information (response signal) responsive to the electromagnetic wave (request signal) and outputs the received authentication information (response signal) to the power supply section 130. Then, the power supply section 130 can output the authentication information to the authentication control section 110. Thus, the authentication control section 110 determines whether or not the authentication information received from the authentication element 74 matches predetermined authentication information. If it has been determined that the authentication information received from the authentication element 74 matches the predetermined authentication information, the authentication control section 110 generates a signal (enabling signal or cancellation signal) that enables use of a predetermined signal of the vehicle 10.

The authentication control section 110 of Fig. 3 is, for example, in the form of an ECU, and the predetermined authentication information is contained or stored in the authentication control section 110 or in a storage section (not shown), such as a memory, of the ECU. The vehicle 10 of Fig. 3 may include an immobilizer 170 that can keep a not-shown drive section, such as a drive motor or an engine, of the vehicle 10 unactivatable unless a cancellation signal is input from the authentication control section 110. The predetermined authentication information corresponds to a key code of the vehicle 10, and upon authentication of the authentication information received from the authentication element 74, the user 50 can activate the drive section of the vehicle 10, for example, via an operation section 44 of Fig. 3 as the predetermined function of the vehicle 10.

Further, the authentication control section 110 may contain or prestore therein an immobilizer code corresponding, for example, to a vehicle code of the vehicle 10. When the authentication information received from the authentication element 74 matches the predetermined authentication information, the authentication control section 110 outputs not only the cancellation signal but also the immobilizer code to the immobilizer 170. The immobilizer 170 contains or prestores therein a predetermined immobilizer code and receives the cancellation signal, and when the immobilizer code received from the authentication control section 110 matches the predetermined immobilizer code, the immobilizer 170 enables the user 50 to activate the drive section of the vehicle 10. In the aforementioned manner, theft or unfair use of the vehicle 10 can be prevented.

The operation section 44 of Fig. 3 is, for example, a key knob as shown in Fig. 1. When the authentication element 74 matches the predetermined authentication information, preferably, when the authentication element 74 matches the predetermined authentication information and the immobilizer code received from the authentication control section 110 matches the predetermined immobilizer code, the user 50 can rotate or turn the operation section (key knob) 44. When the authentication information from the authentication element 74 does not match the predetermined authentication information, on the other hand, the user 50 cannot rotate or turn the operation section (key knob) 44.

A key-knob ECU 180 of Fig. 3 receives information or signal from the immobilizer 170 or authentication control section 110 and controls and detects turning movement of the operation section (key knob) 44. When the operation section (key knob) 44 is turned to an "IGON" position, for example, the key-knob ECU 180 outputs operation information (indicative of "IGON position") of the operation section (key knob) 44 to a not-shown drive-section ECU, such as a motor ECU or an FI (Fuel Injection) ECU. Thus, the drive-section ECU can activate the drive section, such as the drive motor or the engine.

Further, the operation section (key knob) 44 is, for example, a push-type operation section, which can be first depressed and then turned by the user. The key-knob ECU 180 can output operation information (indicative, for example, of depression) of the operation section (key knob) 44 to the authentication control section 110.

If the read section 72 has not received the authentication information from the authentication element 74 of the mobile terminal 28 before lapse of a predetermine time after activation of the read section 72 of the cradle 32, namely, if the user 50 has not placed or set the mobile terminal 28 on the cradle 32 before lapse of the predetermine time after the user opens the door of the vehicle, the authentication control section 110 can stop activation of the read section 72 of the cradle 32. More specifically, the authentication control section 110 stops outputting the activation signal, so that the power supply section 130 stops supplying electric power to the read section 72 of the cradle 32. As a consequence, the power consumption by the vehicular entry system can be even further reduced.

Thus, when the user 50 sets the mobile terminal 28 on the cradle 32 after such stopping of the activation of the read section 72 of the cradle 32, the authentication section 74 of the mobile terminal 28 cannot generate electric power necessary for the transmission of the authentication information (response signal), because the read section 72 of the cradle 32 cannot transmit the electromagnetic wave (request signal). Note, however, that the authentication control section 110 can activate the read section 72 of the cradle 32 only while the user 50 is depressing the operation section (key knob) 44, i.e. when the operation information from the operation section (key knob) 44 is indicating "depression" of the operation section 44. The read section 72 of the cradle 32 can be activated again by the user 50 operating the operation section (key knob) 44, capable of activating the drive section of the vehicle 10, after the activation of the read section 72 of the cradle 32 was stopped. In other words, the user 50 only has to operate the operation section (key knob) 44, capable of activating the drive section of the vehicle 10, without performing any special operation, as a result of which the instant embodiment can enhance user's convenience when the read section 72 of the cradle 32 is to be activated again. Particularly, because the read section 72 of the cradle 32 is activated to operate only for the period when the operation information from the operation section (key knob) 44 is indicating "depression" of the section 44, the power consumption by the vehicular entry system can be even further reduced.

In response to the read section 72 of the cradle 32 being activated again, the authentication element 74 of the mobile terminal 28 can transmit the authentication information (response signal). Thus, when the authentication information from the authentication element 74 matches the predetermined authentication information, the authentication control section 110 transmits the cancellation signal to the immobilizer 170, so that the key-knob ECU 180 allows the user 50 to turn the operation section (key knob) 44 after depressing the operation section (key knob) 44. In other words, the authentication control section 110 authenticates the authentication element 74 of the mobile terminal 28 in response to the user 50 depressing the operation section (key knob) 44, and then, the drive section, such as the drive motor or the engine, of the vehicle 10 can be activated in response to the user 50 turning the operation section (key knob) 44, for example, to the "IGON" position.

The vehicle 10 or the vehicular entry system of Fig. 3 may include a transmission section capable of transmitting a function limiting signal capable of limiting a predetermined function of the mobile terminal 28, and a notification section capable of notifying predetermined notification information. In other words, Fig. 1 merely shows an illustrative embodiment, and depending on at least one object of the present invention, the vehicle 10 or the vehicular entry system may include the authentication control section 110, the door detection section 120, the power supply section 130, the cradle 32, the vehicle battery 160, the immobilizer 170, the key-knob ECU 180, the operation section (key knob) 44, the transmission section, the notification section, etc. In this case, the transmission section may ne, for example, in the form of a communication unit 140, and the notification section may comprise, for example, an indicator 164.

Note that the battery ECU 150 can not only handle information, such as remaining charge, amount of charge, etc. of the vehicle battery 160 to control discharge and charge of the vehicle battery 160, but also output in realtime such information to the authentication control section 110, an in-vehicle network 110 that is for example a CAN (Controller Area Network), etc. Further, the communication unit 140 can communicate not only with the mobile terminal 28 but also with a server 300 located outside the vehicle 10.

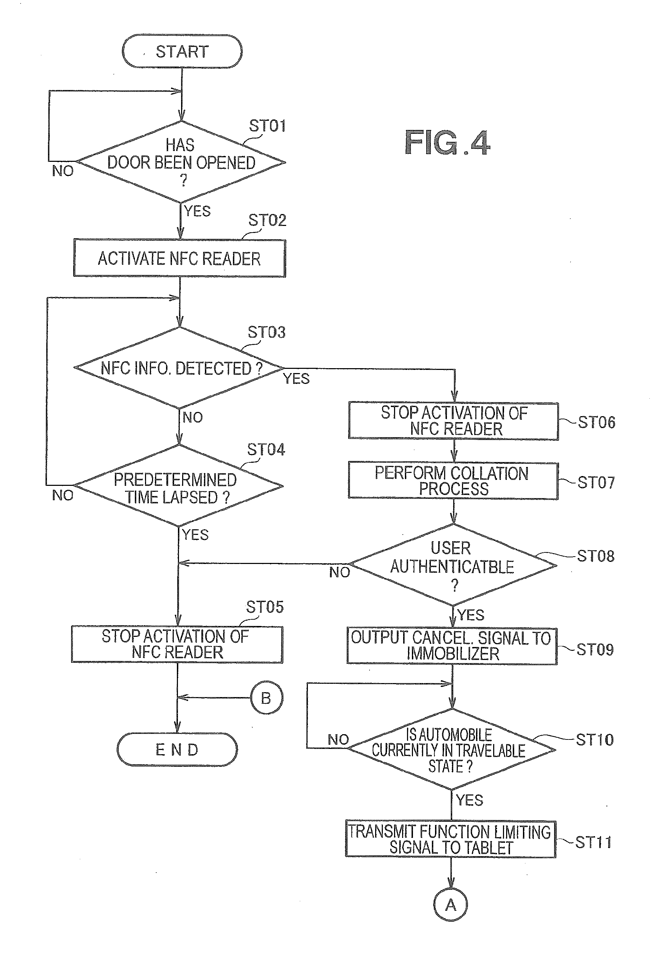

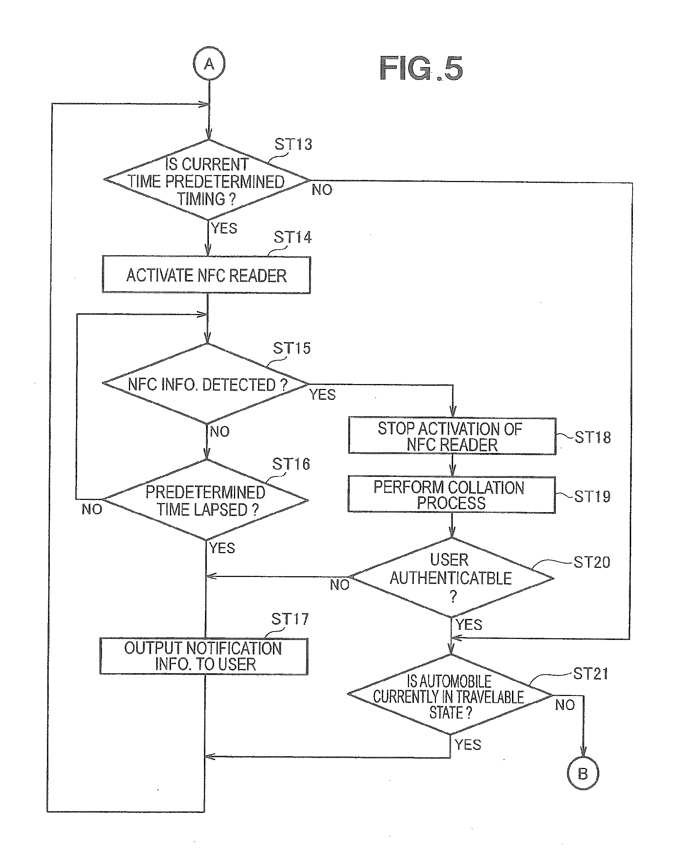

Figs. 4 and 5 are a flow chart showing an example of operation of the authentication control section 110 in the embodiment of the vehicular entry system. The authentication control section 110 of Fig. 3 determines, at step ST01 of Fig. 4, whether the door of the vehicle has been opened. More specifically, for that purpose, the authentication control section 110 of Fig. 3 may determine whether the signal (door signal) from the door detection section120 has changed, for example, from the "Low" level or value "0" to the "High" level or value "1". When the door of the vehicle 10 has been opened by the user 50, in other words, when the user 50 has got in the vehicle 10, the authentication control section 110 of Fig. 3 outputs the activation signal, for example, to the power supply section 130, so that the power supply section 130 starts supplying electric power to the read section 72, such as an NFC (Near Field Communication) reader, of the cradle 32. The authentication control section 110 can cause a not-shown timer or counter to start counting time from when it output the activation signal. The read section 72, such as an NFC (Near Field Communication) reader, can be activated at step ST02 of Fig. 4 in response to the electric power being supplied thereto.

Upon being activated as above, the NFC reader (read section) 72 transmits an electromagnetic wave (request signal) and prepares for reception of authentication information (response signal) returned in response to the electromagnetic wave (request signal). The authentication element 74 of the mobile terminal 28 is an NFC IC or an NFC tag capable of communicating with the NFC reader (read section) 72, and, as the authentication information (response signal), the authentication element 74 can transmit, for example, NFC information that is then stored into the NFC IC or the NFC tag. Here, the NFC IC or the NFC tag (authentication element) 74 can encrypt and transmit the NFC information, and the NFC reader (read section) 72 can decrypt the encrypted NFC information and outputs the decrypted NFC information to the authentication control section 110.

The authentication control section 110 of Fig. 3 determines, at step ST03, whether the NFC information has been input from the NFC reader, i.e. whether the NFC information of the mobile terminal 28 has been detected by the NFC reader. If the NFC information of the mobile terminal 28 has not been detected as determined at step ST03, the authentication control section 110 goes to step ST04, where it determines, using the timer or counter incorporated in the authentication control section 110, whether a predetermined time has lapsed from the time when the NFC reader is activated. If the NFC information of the mobile terminal 28 has not been detected before lapse of the predetermined time, the authentication control section 110 of Fig. 3 stops outputting the activation signal, so that the power supply section 130 stops supplying electric power to the NFC reader 72 of the cradle 32. Then, the authentication control section 110 can reset the timer or counter. In this manner, the authentication control section 110 can stop the activation of the NFC reader 72 of the cradle 32, at step ST05 of Fig. 4.

Then, the operation of the authentication control section 110 is brought to an end. Note, however, that the authentication control section 110 may determine, as noted above, whether depression of the operation section (key knob) 44 has been detected by the key-knob ECU 180. Namely, after execution of step ST05, the authentication control section 110 may determine whether depression of the operation section (key knob) 44 has been detected and then activate again the NFC reader of the cradle 32, as steps similar to ST01 and ST02.

If the NFC information of the mobile terminal 28 has been detected as determined at step ST03, the authentication control section 110 deactivates the NFC reader of the cradle 32 at step ST06 of Fig. 4, although the authentication control section 110 may alternatively continue the activation of the NFC reader. Then, at steps ST07 and ST08 of Fig. 4, the authentication control section 110 performs a collation process and determines whether the user 50 is authenticatable. More specifically, the authentication control section 110 determines whether the NFC information read by the NFC reader matches the predetermined NFC information.

The above-mentioned notification section, capable of notifying predetermined notification information, comprises, for example, an indicator 164 shown in Fig. 2. Whereas the indicator 164 of Fig. 2 comprises a plurality of (e.g., three) display lamps 164-1, 164-2 and 164-3, one display lamp 164-1 adjacent to a steering wheel 14 or driver's seat 18 of the vehicle 10 may be a notification section that notifies a result of the collation, i.e. whether the NFC information read by the NFC reader matches the predetermined NFC information. If the NFC information read by the NFC reader does not match the predetermined NFC information, i.e. if the user 50 has not been authenticated, the display lamp 164-1 may, for example, blink.

If the user 50 has not been authenticated, not only the authentication control section 110 stops the activation of the NFC reader of the cradle 32 (step S05 of Fig. 4), but also the display lamp 164-1 can, for example, blink. If, on the other hand, the user 50 has been authenticated, not only the authentication control section 110 outputs the cancellation signal to the immobilizer 170 (step ST09 of Fig. 4), but also the display lamp 164-1 can, for example, illuminate. Note that the display lamp 164-1 can, for example, blink when the NFC reader is activated.

Next, the authentication control section 110 determines, at step ST10, whether the automobile (vehicle) is currently in a travelable (driveable) state. More specifically, the authentication control section 110 determines whether the not-shown drive section (e.g., drive motor or engine) of the vehicle 10 is being activated, or whether a not-shown shift position is, for example, a "D" range. Note, however, that the authentication control section 110 may omit step ST10.

If it has been determined that the NFC information read by the NFC reader matches the predetermined NFC information, the authentication control section 110 transmits the function limiting signal to the mobile terminal 28, such as a tablet terminal, via the transmission section, such as the communication unit 140, at step ST11 of Fig. 4. Thus, if the tablet terminal has been authenticated, a predetermined function of the tablet terminal is limited, so that the user 50 can more devote himself or herself to driving the vehicle. The predetermined function of the tablet terminal is, for example, an electronic mail (e-mail) application, in which case the user 50 is inhibited from transmitting a message, such as an e-mail, using the tablet terminal. Note that, in a case where the application is operated through a user's operation using, for example, sound recognition, motion sensor or the like, the predetermined function inhibiting use of the application need not be limited. In other words, in a case where the predetermined function need not be limited, for example, due to a user's operation (e.g., screen touch operation) on the e-mail application being switched, for example, to a sound recognition operation, it is possible to secure a state where the application is operable through an sound recognition operation without user's driving of the automobile (vehicle) being hindered.

The communication unit 140 (transmission section) includes, for example, a wireless fidelity or Wifi (registered trademark) communication module, and the tablet terminal too includes, for example a Wifi (registered trademark) communication module. Here, the communication unit 140 is connected with the authentication control section 110, for example, via a USB cable, and the Wifi (registered trademark) communication module of the communication unit 140 operates by electric power from the vehicle battery 160 via the authentication control section 110. Further, the Wifi (registered trademark) communication module of the tablet terminal operates by electric power from the mobile battery. Note, however, that each or any one of the Wifi (registered trademark) communication module of the communication unit 140 and the Wifi (registered trademark) communication module of the tablet terminal may be a wireless communication module other than the Wifi (registered trademark) communication module, such as a Bluetooth (registered trademark) communication module.

At next step ST13 of Fig. 5, the authentication control section 110 determines whether the current time is predetermined timing. More specifically, for this purpose, the authentication control section 110 can cause the timer or counter to start counting time, for example, from when it stopped outputting the activation signal at step ST106 of Fig. 4. In other words, the authentication control section 110 determines, at predetermined timing (preferably at predetermined intervals), a first-authenticated tablet terminal is currently set on the cradle 32. Thus, when the current time is the predetermined timing as determined at step ST13, the authentication control section 110 outputs the activation signal, so that the NFC reader can be activated again at step ST14 of Fig. 5.

If the NFC information of the tablet terminal has not been detected at the predetermined timing as determined at step ST15 of Fig. 5, the authentication control section 110 may continue outputting the activation signal only for a predetermined time at step ST16 of Fig. 5. Note, however, that the authentication control section 110 may omit step ST16; namely, when the NFC information of the tablet terminal has not been detected at the predetermined timing, the authentication control section 110 may generate notification information indicative of warning to the user 50. The authentication control section 110 can output such notification information, for example, to the display lamp 164-1, so that the display lamp 164-1 can, for example, blink to display the warning (step ST17).

When the tablet terminal is not currently set on the cradle 32, the display lamp 164-1 (notification section) can notify the user 50 of the notification information. Thus, the user can be prompted to set again the first-authenticated tablet terminal on the cradle 32. Stated differently, the authentication control section 110 can restrain the first-authenticated tablet terminal from being removed from the cradle 32, and thus, even when use of the predetermined function of the vehicle (e.g., activation of the drive section of the vehicle) is limited, the user 50 can activate again the drive section of the vehicle.

Whereas the notification section has been described above as comprising the display lamp 164-1, it may alternatively comprise, for example, a display section 26a of meter instrument 26 of Fig. 2, a display section 28a of the tablet terminal, a speaker (not shown) disposed on the vehicle 10, and/or the like. The display section 26a of meter instrument 26 of Fig. 2 is capable of displaying not only a vehicle velocity (speed meter) 81 but also other vehicle information 80, such as a shift position meter 82 (e.g., "D"), a remaining battery charge meter 83, an odometer/trip meter, a power meter, a regeneration meter, etc. In addition, the display section 26a of the meter instrument 26 includes warning indicators 31 that include warning lamps, such as a seat belt warning lamp, a vehicle system warning lamp, a remaining-battery-charge warning lamp and a brake warning lamp.

If the NFC information of the tablet terminal has been detected at the predetermined timing as determined at step ST15 of Fig. 5, the authentication control section 110 performs steps ST18, ST19 and ST20 similar to steps ST06, ST07 and ST08 of Fig. 4. Then, if the user 50 is not authenticatable as determined at step ST20, for example, when another mobile terminal not duly authenticated is currently set on the cradle 32, the authentication control section 110 generates notification information indicative of warning to the user 50 and outputs such notification information to the display lamp 164-1, so that the display lamp 164-1 can, for example, blink to display the warning (step ST17).

If, on the other hand, the user 50 is authenticatable as determined at step ST20 of Fig. 5, the authentication control section 110 further determines, at step ST21 of Fig. 5, whether the vehicle is currently in the travelable (driveable) state, more specifically whether the drive section of the vehicle is currently being deactivated (i.e., currently in an activation-stopped state) or whether the operation information of the operation section (key knob) 44 is currently indicative of "OFF position".

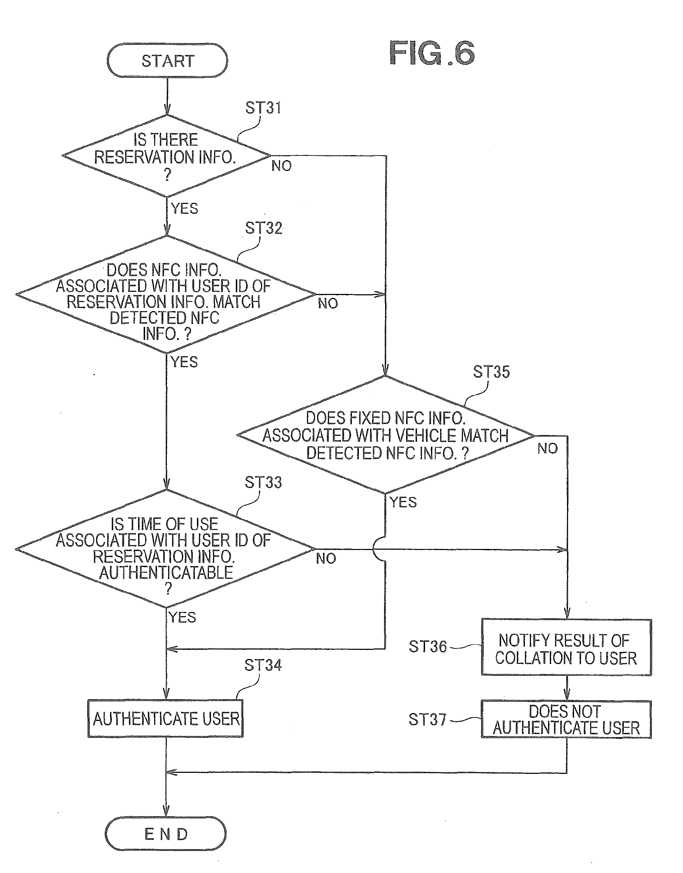

Fig. 6 is a flow chart showing details of the collation process performed at steps ST07 and ST08 of Fig. 4. The authentication control section 110 of Fig. 3 determines, at step ST31, whether there is currently reservation information. Note that the authentication control section 110 is capable of containing or storing not only the predetermined NFC information but also reservation information. Here, the predetermined NFC information may be transmitted from the server 300; in other words, the predetermined NFC information may be variable predetermined information. Needless to say, the predetermined NFC information may be fixed predetermined information or may include both variable predetermined information and fixed predetermined information.

The variable predetermined information can be created in the server 300, and the server 300 can associate, for example, a user ID of the reservation information with the variable predetermined information. More specifically, the user 50 can reserve use of the vehicle by accessing a homepage (not shown) provided by the server 300 and inputting or selecting a user ID, date and time of use, etc. Note that the user 50 may request such reservation via the tablet terminal (mobile terminal 28) or via a not-shown other terminal, such as a PC terminal disposed, for example, in a house of the user 50. The server 300 allows the user to establish such a reservation on the homepage and can associate the reservation information, including the user ID related to the reservation, date and time of use, with the variable predetermined NFC information.

The communication unit 140 of Fig. 3 may include, for example, a 3-G communication module, an LTE (Long Term Evolution) communication module, etc. and is connectable, for example, to a mobile phone communication line and/or an Internet line. Similarly, a not-shown communication unit of the server 300 is connectable, for example, to a mobile phone communication line and/or an Internet line. The server 300 can transmit the reservation information and the predetermined NFC information to the vehicle 10, and the vehicle 10 or the vehicular entry system can receive the reservation information and the predetermined NFC information via the communication unit 140. Then, the authentication control section 110 of Fig. 3 can contain or store the reservation information and the predetermined NFC information.

If there is reservation information as determined at step ST31 of Fig. 6, the authentication control section 110 of Fig. 3 further determines, at step ST32 of Fig. 6, whether the NFC information (i.e., variable predetermined NFC information transmitted from the server 300) associated with the user ID of the reservation information matches the NFC information read (detected) by the NFC reader. In authentication of the variable NFC information read out by the NFC reader, the authentication control section 110 may determine, at step ST33 of Fig. 6, whether the time of use in the reservation information is authenticatable. More specifically, the authentication control section 110 determines whether the current date matches the date of use and the current time matches a time zone from a time point that is, for example, 15 minutes before a start point of the time of use to a time point that is, for example, 15 minutes before an end point of the time of use.

The current time may be measured by a not-shown clock incorporated in the authentication control section 110 or incorporated in other than the authentication control section 110, such as another ECU or in-vehicle device, by a not-shown time server on the Internet, or by a not-shown GPS (Global Positioning System) module mounted on the automobile (vehicle) 10.

Then, in authentication of the time of use included in the reservation information, the authentication control section 110 authenticates the user 50 at step ST34. By the user 50 being authenticated using the predetermined NFC information (variable predetermined authentication information), not only the user 50 but also another user (not shown) is allowed to activate the drive section of the vehicle. The server 300 allows any one of a plurality of users, who brings a tablet terminal having authenticated NFC information, to activate the drive section of the vehicle. Thus, a plurality of users including the user 50 can share the vehicle.

If the NFC information associated with the user ID included in the reservation information (i.e., variable predetermined NFC information transmitted from the server 300) does not match the NFC information read by the NFC reader as determined at step ST32, or if there is currently no reservation information as determined at step ST31, the authentication control section 110 of Fig. 3 determines whether the NFC information read by the NFC reader is authenticatable, more specifically, whether NFC information associated with the vehicle (fixed predetermined NFC information) matches the NFC information read by the NFC reader, at step ST35 of Fig. 6.

The above-mentioned NFC information associated with the vehicle (fixed predetermined NFC information) corresponds to a key code of an owner of the automobile (vehicle) 10. Such fixed predetermined NFC information may be prestored in the authentication control section 110 by a maker or dealer of the automobile (vehicle) 10, or may be prestored in the authentication control section 110, for example, by the user 50 or the like executing a predetermined operation of the automobile.

If the NFC information read by the NFC reader is not authenticatable, the authentication control section 110 notifies a result of the collation to the user 50 at step ST36 of Fig. 6. Similarly, if the time of use included in the reservation information is not authenticatable as determined at step ST33, the authentication control section 110 notifies a result of the collation to the user 50 at step ST36 of Fig. 6. More specifically, at step ST36, the display lamp 164-1 can, for example, blink. In that case, the authentication control section 110 does not authenticate the user 50 at step ST37.

Note that the authentication control section 110 may omit steps ST31, ST32 and ST33 of Fig. 6. In other words, only the owner of the automobile (vehicle) 10 or the user 50 who brings the tablet terminal possessed by the owner may be allowed to drive the automobile (vehicle) 10. Alternatively, the authentication control section 110 may omit step ST35 of Fig. 6. In other words, only a plurality of users including at least one user 50, having reserved driving of the automobile (vehicle) 10, may be allowed to share the automobile (vehicle) 10. If there is currently reservation information, the display lamp 164-1 (notification section) can, for example, blink at low speed.

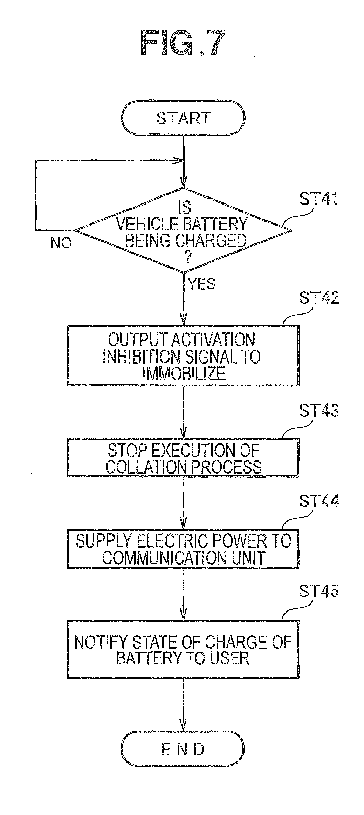

Fig. 7 is a flow chart showing another example of operation of the authentication control section 110 in the embodiment of the vehicular entry system. As noted above, the vehicle 10 or the vehicular entry system may include the battery ECU 150. The battery ECU 150 can charge the vehicle battery 160 with electric power supplied from an external power supply 200 disposed outside the vehicle 10. Let it be assumed here that the vehicle 10 of Fig. 3 is a small electric automobile that may be called a microcommuter.

At step ST41 of Fig. 7, the authentication control section 110 of Fig. 3 determines whether the vehicle battery 160 of the microcommuter (vehicle) 10 is being charged by the external power supply 200. More specifically, the battery ECU 150 detects the external power supply 200, and the authentication control section 110 receives from the battery ECU 150 information indicating that the external power supply 200 has been detected. When the vehicle battery 160 of the microcommuter is being charged by the external power supply 200 as determined at step ST14, the authentication control section 110 can output an activation inhibition signal to the immobilizer 170. In other words, the authentication control section 110 can inhibit activation of the drive section by stopping outputting the activation signal, at step ST42. Simultaneously, the authentication control section 110 can stop activation of the NFC reader. In this way, the authentication control section 110 can stop execution of the collation process 110 at step ST43 of Fig. 7. Namely, when the vehicle battery 160 of the microcommuter is being charged by the external power supply 200, the user 50 cannot drive the microcommuter. With such arrangements, the vehicular entry system can prevent theft of the microcommuter.

At next step ST44 of Fig. 7, the authentication control section 110 supplies electric power of the vehicle battery 160 to the communication unit 140, for example, via a USB cable. When the vehicle battery 160 of the microcommuter is being charged by the external power supply 200, the authentication control section 110 can activate or energize a predetermined electric load, such as the communication unit 140, irrespective of whether or not the authentication information is being transmitted from the authentication element 74. Because the communication unit 140 can be caused to operate like this, the convenience of the user 50 can be enhanced. More specifically, via the communication unit 140, the authentication control section 110 transmits, as information about remaining charge, amount of charge, etc. of the vehicle battery 160, a state of charge of the vehicle battery 160 to the tablet terminal (mobile terminal 28), at step ST45 of Fig. 7. When the user 50 is located outside the microcommuter (vehicle) with the tablet terminal held by the user 50 outside the microcommuter (vehicle), the tablet terminal can monitor states of the vehicle, such as a state of charge of the vehicle battery 160, and thus, the convenience of the user 50 can be even further enhanced. Such states of the vehicle are displayed, for example, on the display section 28a of the tablet terminal.

The indicator 164 shown in Fig. 3 may be a charge indicator, and such a charge indicator 164 may notify various states of charge in predetermined blink patterns. In a case where the indicator (charge indicator) 164 comprise, for example, the plurality of display lamps 164-1, 164-2 and 164-3, the predetermined blink patterns may be provided as follows. When the current amount of charge indicates, for example, a first level of three levels, only the first display lamp 164-1 blinks at predetermined intervals with the remaining, second and third display lamps 164-2 and 164-3 kept turned off. When the current amount of charge indicates, for example, a second level of the three levels, the first display lamp 164-1 is turned on or illuminated and only the second display lamp 164-2 blinks at predetermined intervals with the remaining, third display lamp 164-3 kept turned off. Further, when the current amount of charge indicates, for example, a third level of the three levels, the first and second display lamps 164-1 and 164-2 are turned on, and only the third display lamp 164-3 blinks at predetermined intervals. However, when the user 50 is not located near the microcommuter, the user is unable to recognize the indicator 164 (charge indicator). Thus, the arrangement that states of the vehicle, such as a state of charge of the vehicle battery 160, are displayed on the display section 28a of the tablet terminal can significantly enhance the convenience of the user 50.

Finally, it should be appreciated that the present invention is not limited to the above-described embodiments and that various modifications thereof are also possible without departing from the spirit so as to cover the scope recited in the appended claims.

A vehicular entry system, which performs collation using a mobile terminal (28) having an authentication element (74) and enables use of a predetermined function of a vehicle on the basis of a result of the collation, includes: an authentication control section (110) which, when authentication information from the authentication element (74) matches predetermined authentication information, generates a signal enabling use of the predetermined function of the vehicle; a door detection section (120) which outputs a signal in response to opening/closing of a vehicle door; and a cradle (32) capable of fixing the mobile terminal, the authentication control section (110) activating a read section (72), provided on the cradle, on the basis of the signal from the door detection section, the read section (72) being capable of transmitting an electromagnetic wave, the authentication element (74) being capable of generating electric power from the electromagnetic wave and transmitting the authentication information.

## Claims

1. A vehicular entry system which performs collation using a mobile terminal (28) having an authentication element (74) and enables use of a predetermined function of a vehicle (10) on a basis of a result of the collation, the vehicular entry system comprising:
an authentication control section (110) which, when authentication information from the authentication element (74) matches predetermined authentication information, generates a signal enabling use of the predetermined function of the vehicle;
a door detection section (120) which outputs a signal in response to opening/closing of a door of the vehicle; and
a cradle (32) capable of fixing thereto the mobile terminal (28),
the authentication control section (110) activating a read section (72), provided on the cradle (32), on a basis of the signal output from the door detection section (120),
the read section (72) being capable of transmitting an electromagnetic wave,
the authentication element (74) being capable of generating electric power from the electromagnetic wave and transmitting the authentication information.

2. The vehicular entry system according to claim 1, which further comprises an operation section (44) capable of activating a drive section of the vehicle, and
wherein, when the read section (72) has not received the authentication information from the authentication element (74) before a predetermined time lapses after the authentication control section (110) activates the read section (72), the authentication control section (110) stops activating the read section (72), and
the authentication control section (110) activates the read section (72) only while operation information from the operation section (44) indicates depression of the operation section (44).

3. The vehicular entry system according to claim 1 or 2, which further comprises a transmission section (140) capable of transmitting a function limiting signal for limiting a predetermined function of the mobile terminal (28), and
wherein, when the authentication information from the authentication element (74) matches the predetermined authentication information, the authentication control section (110) transmits, via the transmission section (140), the function limiting signal to the mobile terminal (28).

4. The vehicular entry system according to any one of claims 1 to 3, which further comprises a notification section (164-1) capable of notifying predetermined notification information, and
wherein the read section (72) transmits the electromagnetic wave at predetermined timing after the authentication information from the authentication element (74) matches the predetermined authentication information, and
wherein, when the read section (72) has not received the authentication information from the authentication element (72), the authentication control section (110) notifies the notification information via the notification section (164-1).

5. The vehicular entry system according to any one of claims 1 to 4, wherein the predetermined authentication information is transmitted from a server (300) located outside the vehicle, and
the authentication control section (110) generates the signal enabling use of the predetermined function of the vehicle when not only the authentication information from the authentication element (74) matches the predetermined authentication information but also current time matches reservation information associated with the predetermined authentication information.

6. The vehicular entry system according to any one of claims 1 to 5, wherein, when a vehicle battery (160) of the vehicle is being charged by an external power supply (200) located outside the vehicle (10), the authentication control section (110) not only cancels the signal enabling use of the predetermined function of the vehicle and stops activating the read section (72) but also supplies electric power of the vehicle battery (160) to a predetermined electric load irrespective of whether the authentication information is being transmitted from the authentication element (74).

7. The vehicular entry system according to claim 6, wherein the predetermined electric load is a communication unit (140) capable of transmitting a state of the vehicle.
